# EUROPEAN PATENT APPLICATION

(11) **EP 3 196 438 A1**
(43) Date of publication of application: **26.07.2017**
(21) Application number: 15841280.9
(22) Date of filing: 17.09.2015
(51) Int. Cl.: F02B 63/04, F02B 61/04, F02B 77/13

(54) **ENGINE GENERATOR**

(30) Priority: 19.09.2014 JP 2014192036; 03.03.2015 JP 2015041870
(71) Applicant: Yanmar Co., Ltd., Osaka-shi, Osaka 530-8311 (JP)
(72) Inventor: YAKENO, Masayuki, Osaka-shi Osaka 530-8311 (JP); KIKUCHI, Yukio, Osaka-shi Osaka 530-8311 (JP)
(74) Representative: Jostarndt Patentanwalts-AG
(86) International application number: PCT/JP2015/076586
(87) International publication number: WO 2016/043297

(57) **Abstract**

Provided is an engine generator in which the operation panel is easily accessible. An engine generator 1 is configured such that a generator 2 and an engine 3 which drives the generator 2 are received within a casing 4. A panel 7 having a predetermined size is removably provided to each side surface of the casing 4. An operation board 10 for the engine generator 1 can be installed instead of an arbitrarily selected one of the plurality of panels 7.

## Description

### TECHNICAL FIELD

The present invention relates to an engine generator.

### BACKGROUND ART

A conventional engine generator is covered with a box-shaped casing, and provided with, at a predetermined one surface of the casing, an operation panel for operating the engine generator.

### PRIOR ART DOCUMENT

### PATENT DOCUMENT

Patent Document 1: JP-A 2013-537275

### SUMMARY OF THE INVENTION

### PROBLEMS TO BE SOLVED BY THE INVENTION

In connection with a small boat such as a yacht and a power boat, the smallness of the boat body often limits the space for housing the engine generator to a minimum possible capacity with which the engine generator can be installed. Accordingly, in some cases, the engine generator cannot be disposed in the housing space in the desired orientation. In such cases, the operation panel may be operated only with difficulty.

In view of the foregoing, the present invention provides an engine generator with improved accessibility to an operation panel.

### SOLUTIONS TO THE PROBLEMS

An engine generator includes: a casing; a generator; and an engine that drives the generator, the generator and the engine being housed in the casing, wherein a plurality of panels each having a predetermined dimension are respectively removably provided at side surfaces of the casing, and any selected one of the plurality of panels can be exchanged for a console for the engine generator.

The console is attached on the generator side in the casing.

The casing further houses a control apparatus that controls the generator and the engine, an intake path for taking air into the engine is formed in the casing, and the generator and the control apparatus are cooled by the air flowing through the intake path.

The generator is provided in an intermediate portion of the intake path.

The control apparatus is disposed in the intake path or on a wall surface that constitutes the intake path.

The generator includes an inlet for taking in air and an outlet for discharging the air supplied through the inlet, the inlet is provided in the intermediate portion of the intake path, and an exhaust path that guides the air discharged from the outlet to a discharge port provided in the casing is formed.

The present invention provides improved accessibility to the operation panel of the engine generator.

### BRIEF DESCRIPTION OF THE DRAWINGS

Fig. 1 is a perspective view showing a casing of an engine generator.
Fig. 2 is a schematic side view of an internal structure of the engine generator.
Fig. 3 is a perspective view showing panels and an operation panel attached to a casing.
Fig. 4 is a perspective view showing the operation panel.
Fig. 5 is a perspective view showing a casing according to another embodiment.
Fig. 6 is a perspective view showing a boat in which the engine generator is housed.
Fig. 7 is a perspective view showing the inside of an engine room of the boat.
Fig. 8 is an illustration showing the inside of a boat according to another embodiment.
Fig. 9 is an illustration showing an opening of a lid part provided at a stairway inside the boat shown in Fig. 8.
Fig. 10 is an illustration showing an opening of a lid part provided in a bedroom in the boat shown in Fig. 8.
Fig. 11 is an illustration showing the opening of the lid part provided at the stairway of the boat according to another embodiment.
Fig. 12 is a front perspective view of a casing of an engine generator according to another embodiment.
Fig. 13 is a rear perspective view of the casing of the engine generator according to another embodiment.
Fig. 14 is a front view of the casing of the engine generator according to another embodiment.
Fig. 15 is a rear view of the casing of the engine generator according to another embodiment.
Fig. 16 is a plan view of the casing of the engine generator according to another embodiment.
Fig. 17 is a bottom view of the casing of the engine generator according to another embodiment.
Fig. 18 is a right side view of the casing of the engine generator according to another embodiment.
Fig. 19 is a left side view of the casing of the engine generator according to another embodiment.
Fig. 20 is an illustration showing an opening at an upper surface of the casing of the engine generator according to another embodiment.
Fig. 21 is a partial enlarged view as seen in a front view of the casing of the engine generator according to another embodiment.
Fig. 22 is a partial perspective view showing the internal structure of an intake path of the engine generator according to another embodiment.
Fig. 23 is a schematic right side view showing the internal structure of the engine generator according to another embodiment.
Fig. 24 is a schematic left side view showing the internal structure of the engine generator according to another embodiment.
Fig. 25 is a schematic plan view showing the internal structure of the engine generator according to another embodiment.
Fig. 26 is a cross-sectional view taken along line A-A in Fig. 25 showing flow of air discharged from a generator of the engine generator according to another embodiment.
Fig. 27(a) is an illustration showing an operation panel of the engine generator according to another embodiment.
Fig. 27(b) is an illustration showing the operation panel of the other embodiment.
Fig. 28 is a front perspective view showing the casing according to another embodiment.
Fig. 29 is a rear perspective view showing the casing according to another embodiment.

### EMBODIMENTS OF THE INVENTION

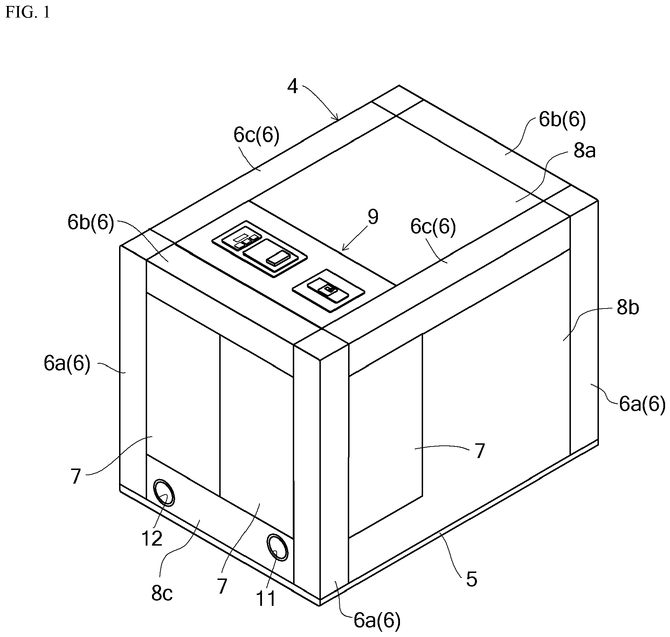

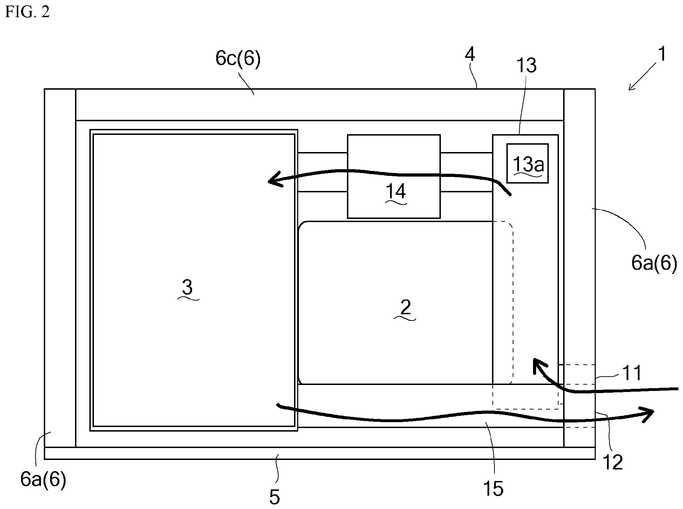

With reference to Figs. 1 and 2, a description will be given of an engine generator 1.

The engine generator 1 includes a generator 2, an engine 3 that drives the generator 2, and a casing 4 that houses the generator 2 and the engine 3.

The engine generator 1 according to the present embodiment is a marine engine generator installed in a boat such as a yacht or a power boat.

In the following, as to the engine generator 1, it is defined that the side where the engine 3 is provided is the front side, and the side where the generator 2 and a suction port 11, which will be described later, are provided is the rear side.

As shown in Fig. 1, the casing 4 is box-shaped. The casing 4 includes: a bottom plate 5 that forms the bottom surface of the casing 4; a substantially rectangular parallelepiped-shaped support frame 6 being the framework member of the casing 4; panels 7 and panels 8a, 8b, 8c that are attached to the support frame 6 and form the side surfaces of the casing 4; and an operation panel 9 for operating the engine generator 1.

The operation panel 9 is provided at a side surface of the casing 4. In Fig. 1, the operation panel 9 is provided at the upper surface of the casing 4.

At the rear surface of the casing 4, the suction port 11 and an exhaust port 12 are provided.

With reference to Fig. 2, a description will be given of the internal structure of the engine generator 1.

A control box 13 is provided on the front side of the suction port 11. Inside the control box 13, a control apparatus 13a is provided at the upper portion, and the generator 2 is disposed so as to partially penetrate into the lower portion. The generator 2 extends frontward. On the front side of the control apparatus 13a, an air cleaner 14 is provided. On the front side of the generator 2 and the air cleaner 14, the engine 3 is provided so as to be adjacent to the front portion of the generator 2. To the rear side of the engine 3, one end of an exhaust pipe 15 is connected. Other end of the exhaust pipe 15 is connected to the exhaust port 12 provided at the rear surface of the casing 4.

Air sucked into the casing 4 through the suction port 11 flows into the control box 13 which communicates with the suction port 11. Then, the air is supplied to the engine 3 via the air cleaner 14. Exhaust from the engine 3 is guided to the exhaust port 12 via the exhaust pipe 15, to be discharged outside the engine generator.

A description will be given of the cooling system of the engine 3.

The engine 3 is an engine installed in a boat such as a yacht or a power boat, and provided with an intercooler which cools clear water, which cools the inside of the engine 3, with water in which the boat sails. The clear water circulates through the engine 3 by a coolant pump provided at the engine 3, and is cooled at the intercooler by heat exchange with the water in which the boat sails.

As shown in Fig. 1, on the bottom plate 5, the engine generator 1 is mounted. The bottom plate 5 is formed to be substantially quadrangular with iron or the like. The bottom plate 5 is attached to a supporting chassis or the like that is fixed to the floor of an engine room or the like.

The support frame 6 is formed to be substantially rectangular parallelepiped-shaped. The support frame 6 includes support frames 6a that stand upright from the four corners of the bottom plate 5, support frames 6b that respectively connect between the upper ends of the support frames 6a respectively disposed on the right and left sides, and support frames 6c that respectively connect between the upper ends of the support frames 6a respectively disposed on the front and rear sides.

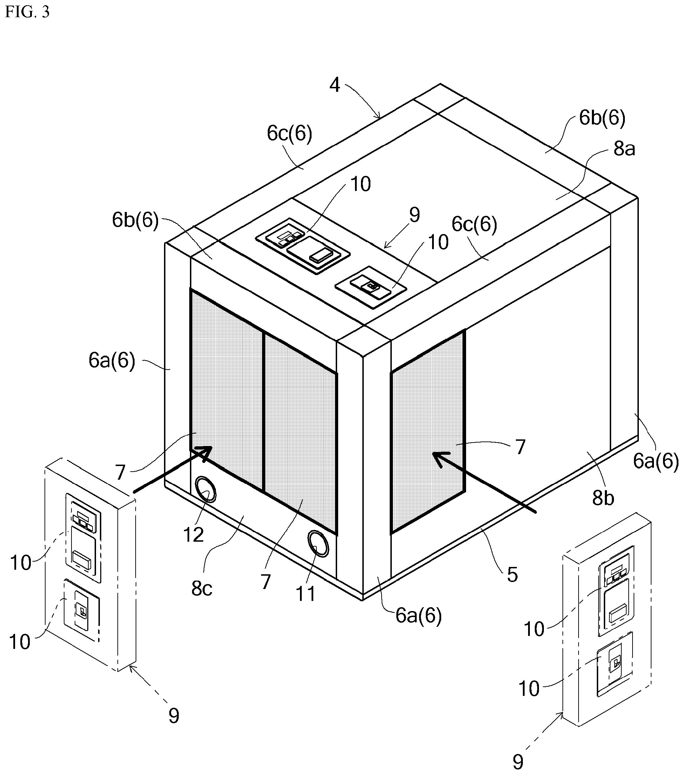

With reference to Fig. 3, a description will be given of the side surfaces of the casing 4.

The upper surface of the casing 4 includes the operation panel 9 and the panel 8a. The upper surface of the casing 4 is entirely covered with the operation panel 9 and the panel 8a. The operation panel 9 is removably attached to the support frames 6b, 6c that constitute the upper surface of the casing 4 with bolts or the like. The panel 8a is fixed to the support frames 6b, 6c that constitute the upper surface of the casing 4.

The right side surface and the left side surface of the casing 4 each include the panel 7 and the panel 8b formed to have a predetermined dimension. The right side surface and the left side surface of the casing 4 are each entirely covered with the panel 7 and the panel 8b. The panels 7 are respectively removably attached to the support frames 6a, 6c structuring the right side surface and the left side surface of the casing 4 with bolts or the like. The panels 8b are respectively fixed to the support frames 6a, 6c that structure the right side surface and the left side surface of the casing 4.

The rear surface of the casing 4 includes the panels 7 and the panel 8c. The rear surface of the casing 4 is entirely covered with the panel 7 and the panel 8c. The panels 7 are removably attached to the support frames 6a, 6b structuring the rear surface of the casing 4 with bolts or the like. The panel 8c is fixed to the support frames 6a, 6b that constitute the rear surface of the casing 4. The panel 8c is provided with the suction port 11 and the exhaust port 12.

Note that, at the front surface of the casing 4, one panel is fixed to the support frames 6a, 6b so as to entirely cover the front surface.

As shown in Figs. 2 and 3, the panels 7 are disposed on the generator 2 side in the longitudinal direction (the front-rear direction) of the casing 4.

The generator 2 side refers to the side opposite to the engine 3 side in the casing 4. That is, in the present embodiment, the generator 2 side refers to the rear side of the casing 4.

The predetermined dimension of the panels 7 refers to the dimension which allows the panels 7 to be attached to all the side surfaces of the casing 4 excluding the bottom surface of the casing 4, and which allows consoles 10, which will be described later, to be attached to the panels 7. In the present embodiment, the dimension of the panel provided at the rear surface of the casing 4 as being divided into right and left pieces corresponds to the dimension of each panel 7.

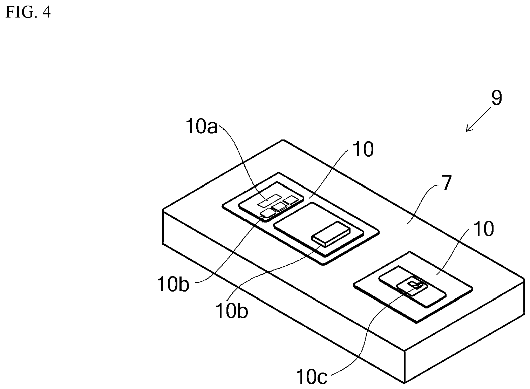

As shown in Figs. 3 and 4, among the panels 7 provided to the side surfaces of the casing 4, one panel 7 functions as the operation panel 9 by the consoles 10 being attached thereto.

The consoles 10 are provided for an operator to operate the engine generator 1, such as actuation of the engine generator 1, and for indication of the operational state of the engine generator 1.

The consoles 10 are disposed as being divided at the upper portion and the lower portion of the panel 7. At the upper portion, a monitor 10a for indicating the operational state and a switch 10b for controlling the operation of the engine generator 1 are provided. At the lower portion, a breaker 10c is provided.

The consoles 10 are fitted into any panel 7 so as to be operated from the outside of the casing 4, and fixed with bolts or the like. To the consoles 10, a plurality of cables connected to the control apparatus 13a are connected via connectors.

In attaching the operation panel 9 to the casing 4, the plurality of cables are previously attached to the consoles 10 via the connectors, and thereafter the operation panel 9 is attached to the casing 4.

In the case where the attaching position of the operation panel 9 is to be changed, any selected one of the panels 7 provided to the casing 4 is exchanged for the operation panel 9, thereby easily changing the position of the operation panel 9.

As described above, the panels 7 are provided at the side surfaces of the casing 4. Any selected one of the panels 7 can be removed to provide the operation panel 9. Thus, in the case where the space housing the engine generator 1 is small and the engine generator 1 cannot be disposed in the desired orientation, by changing the attaching position of the operation panel 9, the accessibility and visibility of the operation panel 9 of the engine generator 1 can be kept intact.

On the front side of the casing 4, a pulley, a timing belt and the like that drive a coolant pump of the engine 3 are disposed. Further, the temperature is high on the front side of the casing 4 because of exhaust heat of the engine 3 and the like.

Disposing the panels 7 on the generator 2 side can avoid disposing the plurality of cables, which are connected to the consoles 10 and the consoles 10 attached to the operation panel 9, around the engine 3. Therefore, the plurality of cables connected to the consoles 10 are less prone to be damaged by becoming entangled with the timing belt or the like or disconnected by exhaust heat of the engine 3. Thus, excellent operability of the consoles 10 can be maintained.

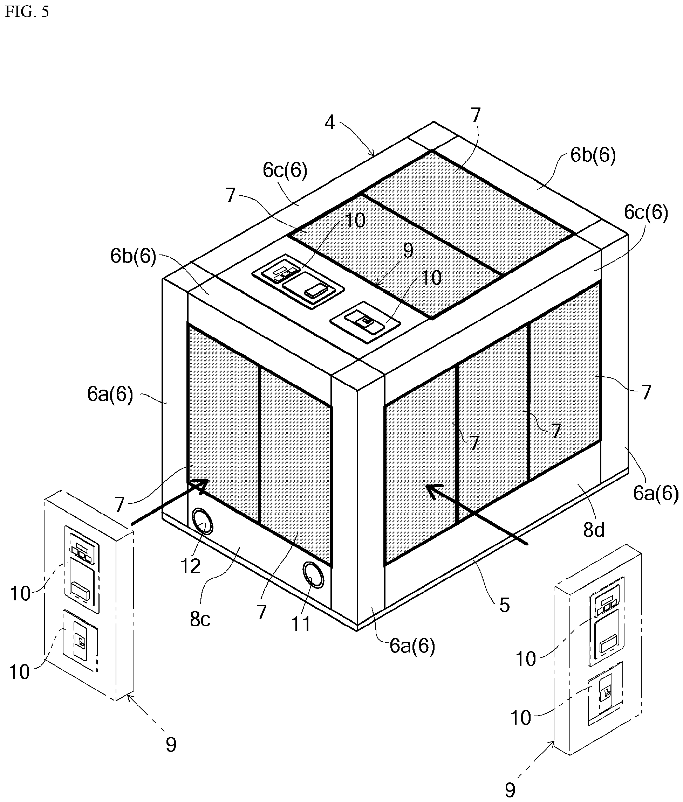

Note that, as another embodiment of the present invention, in the case where it is not necessarily to take into consideration of the above-noted entangling with the timing belt or exhaust heat of the engine 3, as shown in Fig. 5, the side surfaces of the casing 4 may include a plurality of panels 7.

The upper surface of the casing 4 includes the operation panel 9 and two panels 7. The operation panel 9 and the panels 7 are removably attached to the support frames 6b, 6c that constitute the upper surface of the casing 4 with bolts or the like.

The right side surface and the left side surface of the casing 4 each include three panels 7 and a panel 8d. The panels 7 are removably attached to the support frames 6a, 6c that constitute the right side surface and the left side surface of the casing 4 with bolts or the like. The panel 8d is fixed to the support frames 6a, 6c that constitute the right side surface and the left side surface of the casing 4.

The front surface and the rear surface of the casing 4 each include two panels 7 and the panel 8c. The panels 7 are removably attached to the support frames 6a, 6b that constitute the front surface and the rear surface of the casing 4 with bolts or the like. The panel 8c is fixed to the support frames 6a, 6b that constitute the front surface and the rear surface of the casing 4.

As described above, by virtue of the plurality of panels 7 being provided at one side surface, the attachable positions where the operation panel 9 can be attached increase. Accordingly, even in the case where the engine generator 1 can only be accessed from part of one side surface, attaching the operation panel 9 to any accessible attachable position out of the plurality of attachable positions establishes accessibility.

Note that, the side surfaces of the casing 4 may include one or a plurality of panels 7 disposed at desired positions. Therefore, the number of panels 7 structuring each side surface of the casing 4 is not limited to the number described above.

Note that, the operation panel 9 and the panels 7 may be attached to the support frame 6 using a magnet. Forming the support frame 6, or the operation panel 9 and the panels 7 with magnetic stainless steel, and providing a magnet to the support frame 6, or to the operation panel 9 and the panels 7, the operation panel 9 and the panels 7 can be attached to the support frame 6.

Further, the plurality of cables connected to the control apparatus 13a may be distributed according to the number of panels 7 of a predetermined dimension, and a connector receiver that fits with each connector may be provided for each panel 7 of the predetermined dimension. In this manner, distributing the cables according to the number of panels 7 of a predetermined dimension eliminates, in attaching the operation panel 9, the necessity of shifting the cables following shifting of the panels 7 of a predetermined dimension. Thus, attaching the operation panel 9 can be carried out with ease.

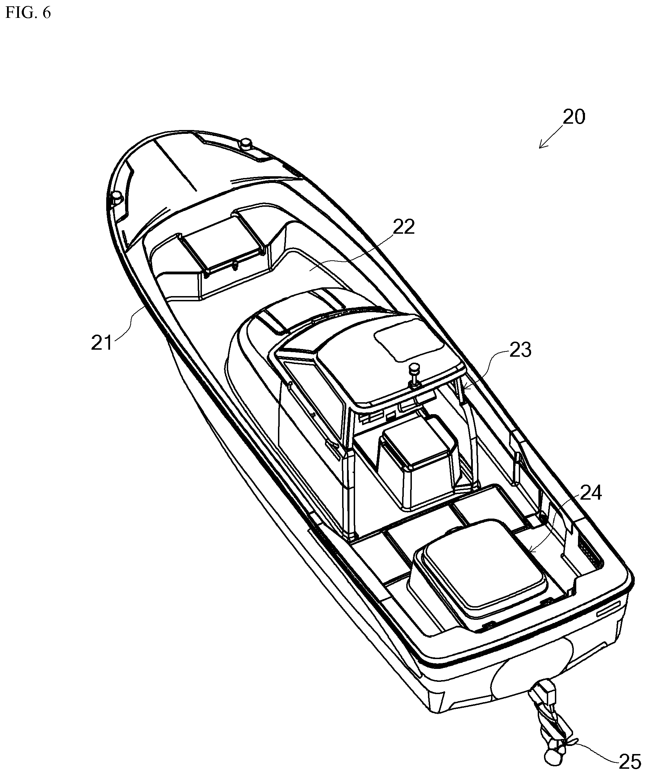

With reference to Fig. 6, a description will be given of the boat 20 in which the engine generator 1 is installed.

The boat 20 includes: a boat body 21; a deck 22 being the floor at the upper edge of the boat body 21; a pilot house 23 provided at the center of the deck 22 and in which the operator steers the boat; an engine room 24 provided on the rear side inside the boat body 21; and a propeller 25 provided on the tail side of the bottom of the boat body 21.

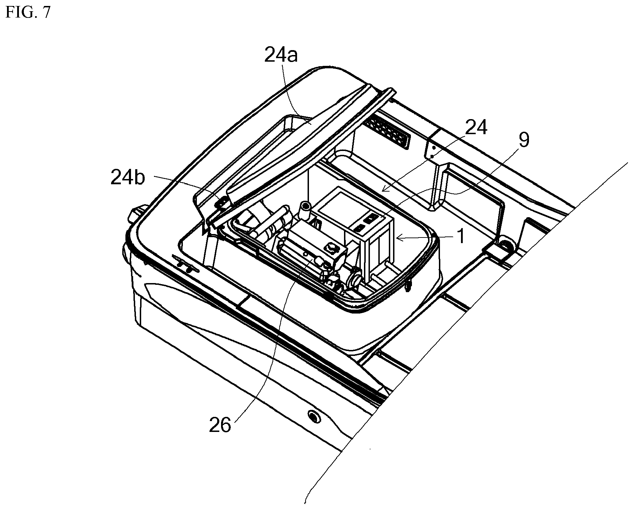

As shown in Fig. 7, the engine room 24 protrudes from the inside of the boat body 21 upward relative to the deck 22. A quadrangular opening lid 24a is openably provided at the top of the engine room 24. The opening lid 24a has its one end rotatably supported at the upper edge of the engine room 24 via a hinge 24b. Opening the opening lid 24a establishes accessibility to the engine room 24.

The engine room 24 houses a main engine 26 and the engine generator 1. The main engine 26 is connected to the propeller 25 (see Fig. 6). The power transferred from the main engine 26 rotates the propeller 25, whereby the boat 20 is propelled.

As shown in Fig. 7, even in the case where the engine room housing the engine generator 1 is small and operation can only be performed at a predetermined one side surface (the upper surface of the casing 4) of the casing 4, attaching the operation panel 9 to the predetermined one side surface enables easy access to the operation panel 9 and also improves visibility.

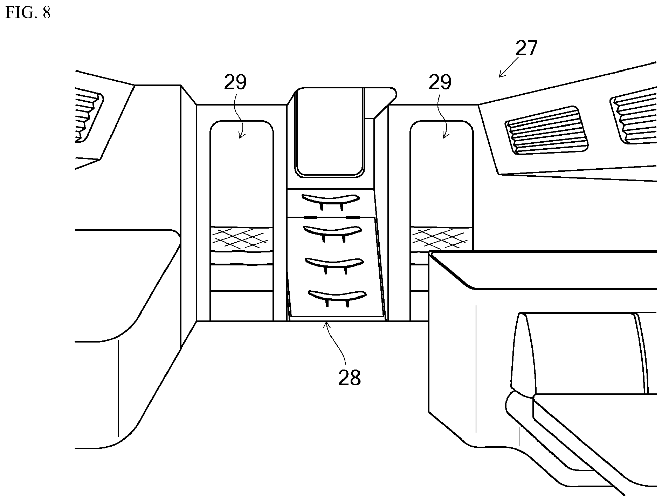

In another embodiment of the boat housing the engine generator 1 shown in Fig. 8, a living room 27 is provided inside the boat. The living room 27 is accessible from the upstairs deck via a stairway 28. On the opposite sides of the stairway 28, bedrooms 29, 29 are respectively provided.

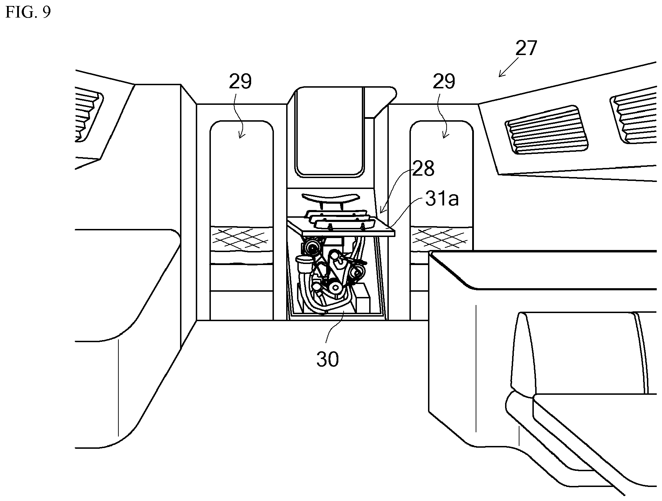

As shown in Fig. 9, in a space behind the stairway 28, a main engine 30 is provided. On the depth side of the main engine 30 (the side opposite to the living room 27), the engine generator 1 is provided. The stairway 28 is provided with a lid part 31a having a portion being upwardly rotatable. By the lid part 31 a being rotated upward and fixed, the main engine 30 is exposed and becomes accessible.

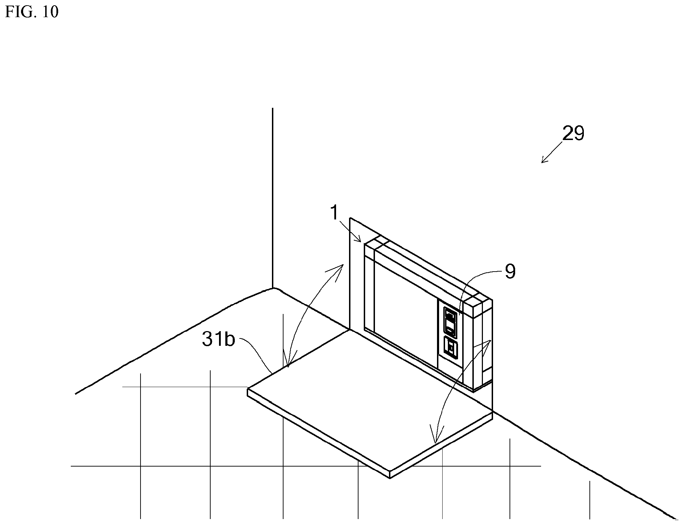

As shown in Fig. 10, the side surface on the stairway 28 side of the bedroom 29 is provided with a lid part 31b having a portion being rotatable toward the bedroom side. The lid part 31b is configured to be rotatable in the top-bottom direction. By the lid part 31b being rotated toward the bedroom side, one side surface of the engine generator 1 (the right side surface or the left side surface of the casing 4) is exposed and becomes accessible.

As described above, even in the case where the space housing the engine generator 1 is small and operation can only be performed at a predetermined one side surface (the right side surface or the left side surface of the casing 4) of the casing 4, attaching the operation panel 9 to the predetermined one side surface enables easy access to the operation panel 9 and also improves visibility.

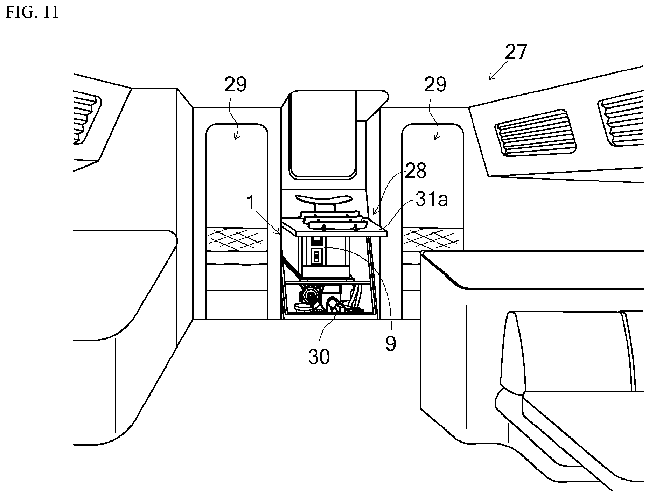

In another embodiment of the boat housing the engine generator 1 shown in Fig. 11, in a space behind the stairway 28, the main engine 30 and the engine generator 1 are disposed one above the other.

The stairway 28 is provided with the lid part 31a having a portion being upwardly rotatable. By the lid part 31a being rotated upward and fixed, the main engine 30 and one side surface of the engine generator 1 are exposed and become accessible. The one side surface of the engine generator 1 refers to the front surface or the rear surface of the casing 4.

As described above, even in the case where the space housing the engine generator 1 is small and operation can only be performed at a predetermined one side surface (the front surface or the rear surface of the casing 4) of the casing 4, attaching the operation panel 9 to the predetermined one side surface enables easy access to the operation panel 9 and also improves visibility.

As has been described above, the engine generator 1 is disposed at various places depending on the boat which houses the engine generator 1. In any of these cases, attaching the operation panel 9 according to the exposed surface (the accessible surface) of the engine generator 1 enables easy access to the engine generator 1 and also improves visibility.

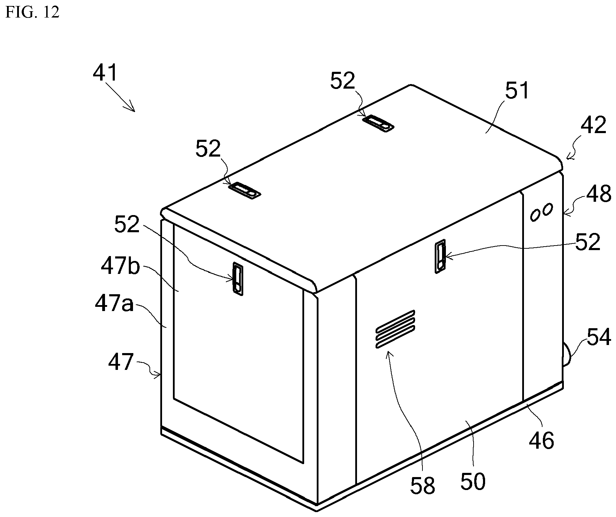

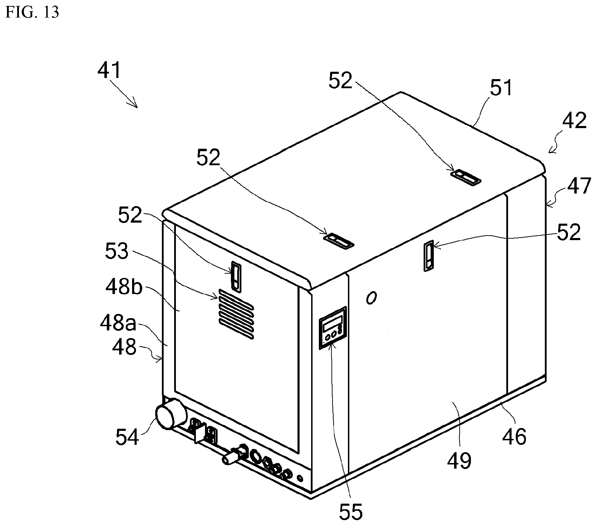

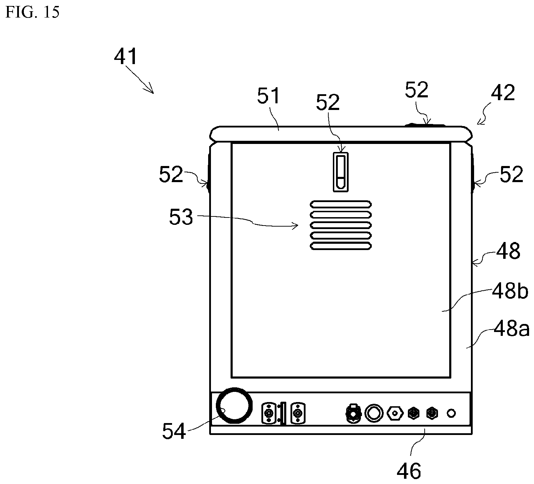

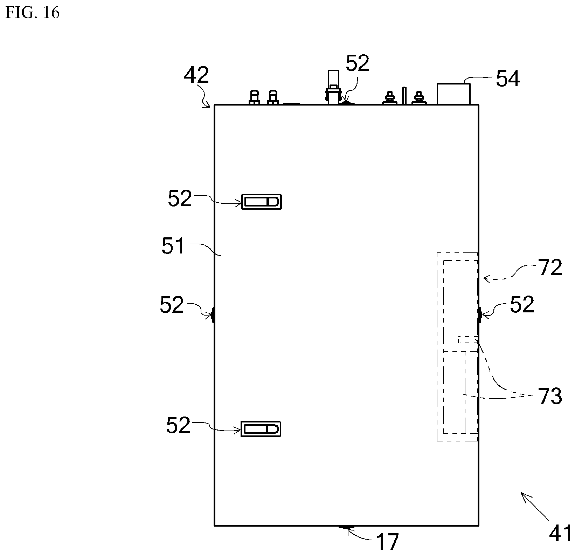

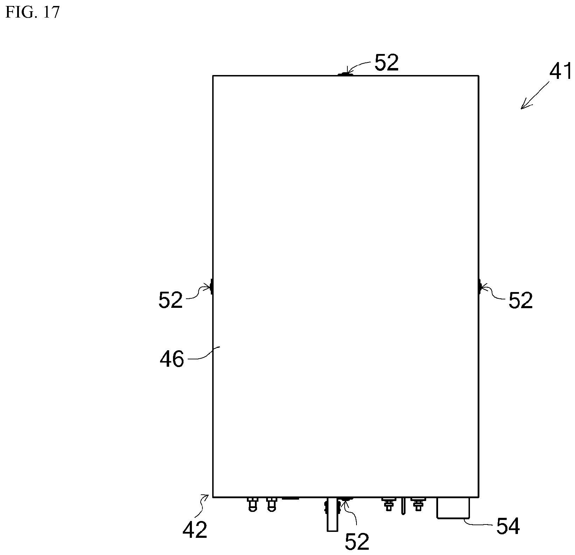

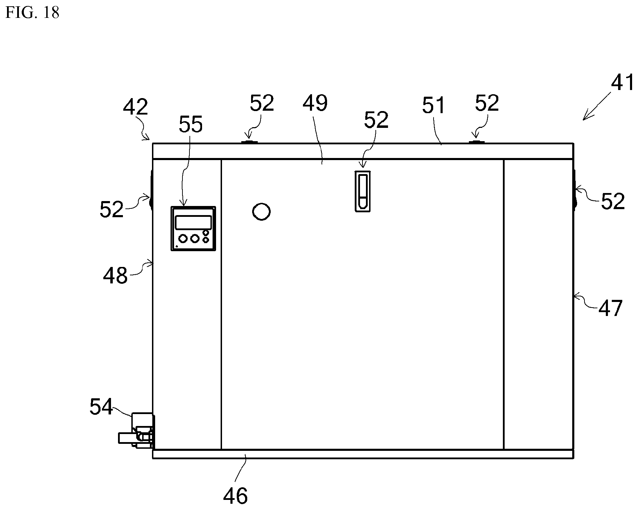

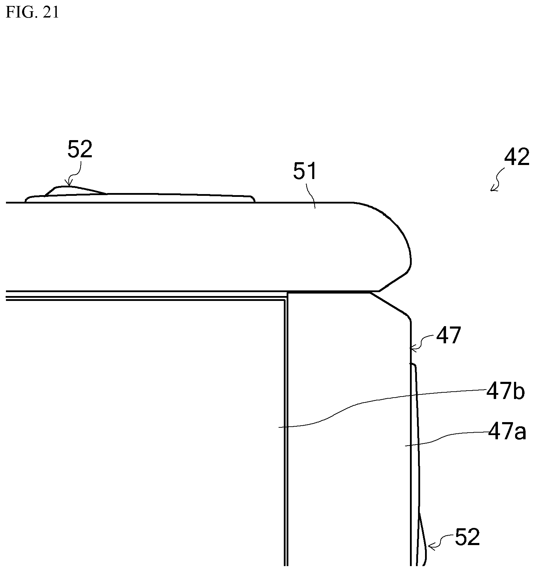

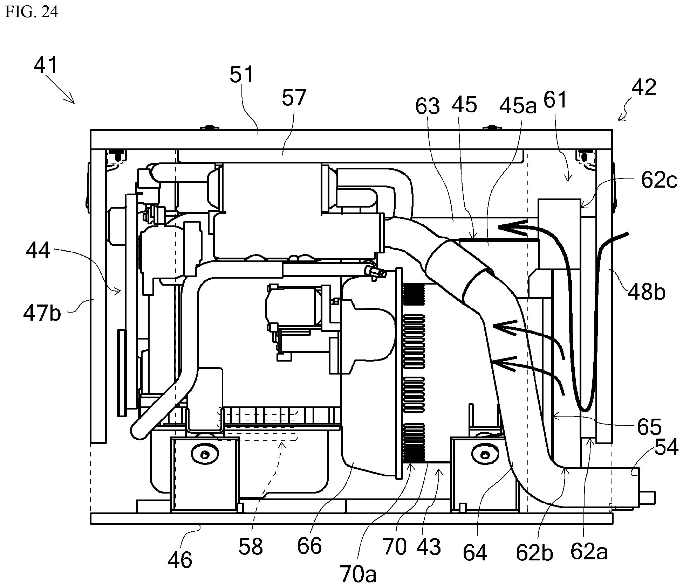

With reference to Figs. 12 to 25, a description will be given of an engine generator 41.

The engine generator 41 according to the present embodiment is a power generation apparatus that drives a generator by an engine, and mainly installed in a boat such as a yacht or a power boat.

The engine generator 41 is configured to house, in a casing 42, a generator 43, an engine 44 that drives the generator 43, and a control apparatus 45 that controls the generator 43 and the engine 44.

In the following description, as to the engine generator 41, it is defined that the side where the engine 44 is provided is the front side, and the side where the generator 43 and an intake port 53, which will be described later, are provided is the rear side.

With reference to Figs. 12 to 19, a description will be given of the casing 42.

The casing 42 is substantially box-shaped, by joining and fixing a metal member which is made of aluminum or the like and has undergone sheet-metal working. The casing 42 includes: a bottom plate 46 that forms the bottom surface of the casing 42; a front plate 47 that forms the front surface and the front side surface of the casing 42; a rear plate 48 that forms the rear surface and the rear side surface of the casing 42; a right side plate 49 that forms the right side surface of the casing 42; a left side plate 50 that forms the left side surface of the casing 42; and a top plate 51 that forms the upper surface of the casing 42.

The bottom plate 46 is made of resin, plastic or the like and formed to be substantially quadrangular, and the engine generator 41 is mounted thereon. The bottom plate 46 is attached to a supporting chassis or the like that is fixed to the floor of an engine room or the like.

The front plate 47 is formed by a metal member which is made of aluminum or the like and has undergone sheet-metal working. The front plate 47 stands upright from the bottom plate 46 via pins or the like, and forms the front surface and the front side surface of the casing 42. The front plate 47 includes a front plate 47a, and a front plate 47b that is removably provided to the front plate 47a.

The front plate 47a is formed by a piece of sheet metal being bent twice, so as to be substantially U-shaped as seen in a top view. The front plate 47a is provided with an opening at its front surface.

The front plate 47b is provided with a fixture 52 at its upper central portion. The front plate 47b is removably attached to the opening provided at the front plate 47a with the fixture 52.

The rear plate 48 is formed by a metal member which is made of aluminum or the like and has undergone sheet-metal working. The rear plate 48 stands upright from the bottom plate 46 via pins or the like, and forms the rear surface and the rear side surface of the casing 42. The rear plate 48 includes a rear plate 48a, and a rear plate 48b that is removably provided to the rear plate 48a.

The rear plate 48a is formed by a piece of sheet metal being bent twice, so as to be substantially U-shaped as seen in a top view. The rear plate 48a is provided with an opening at its rear surface.

The rear plate 48b is provided with a fixture 52 at its upper central portion. The rear plate 48b is removably attached to the opening provided at the rear plate 48a with the fixture 52.

Below the fixture 52 at the rear plate 48b, the intake port 53 for taking air into the casing 42 from the outside is provided. The intake port 53 includes five communication holes arranged vertically, each communication hole being elongated in the longitudinal direction which is the right-left direction.

At the lower portion of the rear plate 48a, various connection ports are provided, such as a discharge port 54 from which air from the engine 44 is discharged, a fuel feed port, a fuel return port and the like. At the upper portion of the right side surface of the rear plate 48a, an operation panel 55 is removably attached as means for operating the generator 43 and the engine 44 through the control apparatus 45.

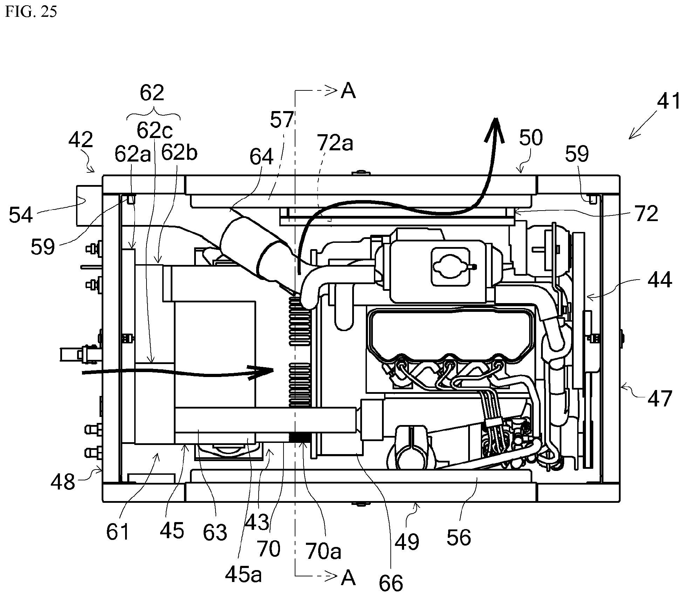

The right side plate 49 is formed by a metal member which is made of aluminum or the like and has undergone sheet-metal working. The right side plate 49 stands upright from the bottom plate 46 via pins or the like, and provided so as to fill the space between the right side surface of the front plate 47 and the right side surface of the rear plate 48. The right side plate 49 is provided with a fixture 52 at its upper central portion. The right side plate 49 is removably attached, with the fixture 52, to an upper frame 56, which is provided to connect between the upper end of the right side surface of the front plate 47 and the upper end of the right side surface of the rear plate 48 (see Fig. 25).

The left side plate 50 is formed by a metal member which is made of aluminum or the like and has undergone sheet-metal working. The left side plate 50 stands upright from the bottom plate 46 via pins or the like, and provided so as to fill the space between the left side surface of the front plate 47 and the left side surface of the rear plate 48. The left side plate 50 is provided with a fixture 52 at its upper central portion. The left side plate 50 is removably attached, with the fixture 52, to an upper frame 57 (see Fig. 25) which is provided to connect between the upper end of the left side surface of the front plate 47 and the upper end of the left side surface of the rear plate 48. At the front upper portion in the outer circumferential surface of the left side plate 50, an exhaust port 58 for discharging air inside the casing 42 is provided. The exhaust port 58 includes three communication holes arranged one on the other, each communication hole being elongated in the longitudinal direction which is the front-rear direction.

The top plate 51 is supported at the upper ends of the front plate 47, the rear plate 48, the left side plate 50, and the right side plate 49.

On one end side (the right side) of the top plate 51, two fixtures 52 are provided at a predetermined interval. The other end side (the left side) of the inner circumferential surface of the top plate 51 is supported at the other end side (the left side) of the inner circumferential surface of the front plate 47 and the rear plate 48 via pins 59 (see Fig. 25). In the state where the other end side of the top plate 51 is supported, by the top plate 51 having its one end side attached, with the fixtures 52, to the upper frame 56 provided on the one end side (the right side) of the front plate 47 and the rear plate 48, the top plate 51 is fixed to the upper ends of the front plate 47, the rear plate 48, the left side plate 50, and the right side plate 49.

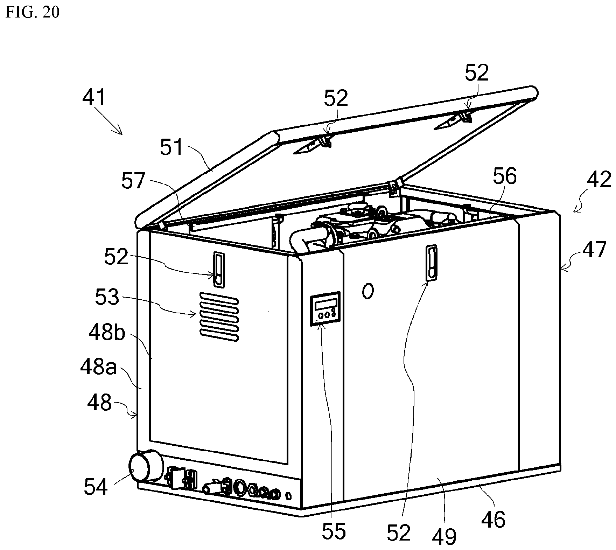

As shown in Fig. 20, disengaging the one end side (the right side) of the top plate 51 using the fixtures 52 from the upper frame 56 allows the upper surface of the casing 42 to open.

Other end side (the left side) of the inner circumferential surface of the top plate 51 is configured to be supportable also at one end side (the right side) of the inner circumferential surfaces of the front plate 47 and the rear plate 48 via pins. Accordingly, in the state where the top plate 51 is horizontally rotated by 180 degrees, the top plate 51 can be removably fixed to the upper ends of the front plate 47, the rear plate 48, the left side plate 50, and the right side plate 49.

In the structure described above, even in the case where the space housing the engine generator 41 is small and operation can only be performed at a predetermined one side in the right-left direction of the casing 42, changing the orientation of the top plate 51 so that the fixture 52 side (the opening side) is oriented toward any desired side in the right-left direction of the top plate 51 allows the upper surface of the casing 42 to be opened in any desired orientation in the right-left direction, from which opening maintenance can be performed.

As shown in Figs. 12, 13, and 21, as seen in the front-rear direction, the lower edge corner of the top plate 51 and the upper edge corner of each of the front plate 47, the rear plate 48, the left side plate 50, and the right side plate 49 that support the top plate 51 are provided as being inclined.

As seen in the front-rear direction, by the lower edge corner of the top plate 51 and the upper edge corner of each of the front plate 47, the rear plate 48, and the left side plate 50, and the right side plate 49 being provided as being inclined, a space is formed between, as seen in the front-rear direction, the lower edge corner of the top plate 51 and the upper edge corner of each of the front plate 47, the rear plate 48, the left side plate 50, and the right side plate 49. Since the operator can put his/her hand into this space, the operator can easily remove the top plate 51 from the casing 42.

Further, as seen in the front-rear direction (as seen in a front view or as seen in a rear view), the upper edge corner of the top plate 51 is formed to be curved.

As seen in the front-rear direction, by the upper edge corner of the top plate 51 being formed to be curved, when the operator puts his/her hand into the space and lifts the top plate 51, the upper edge corner of the top plate 51 presents no obstacle to the operator's hand. This further facilitates removing the top plate 51 from the casing 42.

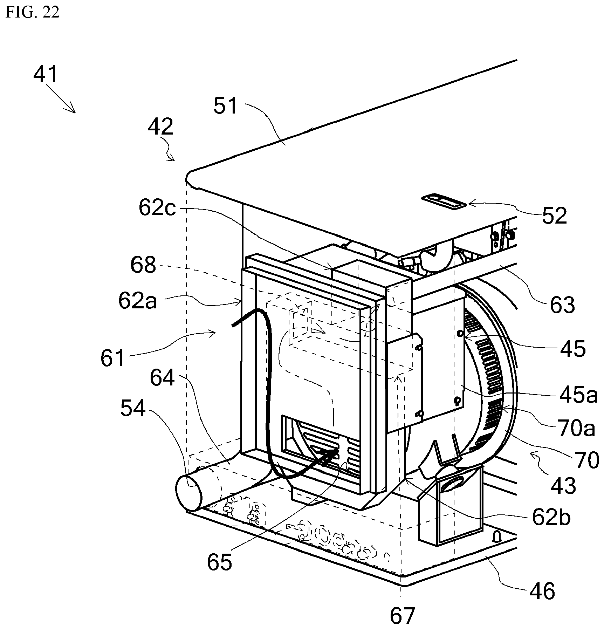

With reference to Figs. 22 to 26, a description will be given of the internal structure of the engine generator 41.

The engine 44 is provided on the front side in the casing 42, and the generator 43 is provided on the rear side in the casing 42. In the casing 42, an intake path 61 for taking air from the intake port 53 into the engine 44 is provided. The intake path 61 includes an intake box 62 provided between the intake port 53 and the generator 43, and an intake pipe 63 that extends frontward from the intake box 62 toward the engine 44.

The intake box 62 is formed as a passage that supplies air from the intake port 53 to the generator 3 and the engine 4.

The intake box 62 includes an intake box 62a through which air flows downward from the intake port 53, an intake box 62b formed on the front side of the intake box 62a and through which air flows upward, and an intake box 62c provided on the upper side of the intake box 62b.

The intake box 62a is formed to be substantially box-like with a plate-like member. The intake box 62a is fixed so as to be in close contact with the rear plate 48b of the casing 42. Through the intake port 53 provided at the rear plate 48b, communication is established between the intake box 62a and the outside of the casing 42.

The intake box 62b is formed to be substantially box-like with a plate-like member. The rear surface of the intake box 62b is provided so as to be in close contact with the front surface of the intake box 62a. At a lower portion of the close-contact surface, a communication hole that establishes communication between the intake box 62a and the intake box 62b is provided. The intake box 62b is provided at a height substantially identical to the height at which the generator 43 is provided.

At the inner upper portion of the intake box 62b, an introduction chamber 67 that introduces air taken in from the intake box 62a into the intake box 62c is formed. The introduction chamber 67 includes a partition partitioning the inner upper portion of the intake box 62b. The introduction chamber 67 is formed toward the right end in the inner upper portion of the intake box 62b. At the left side surface of the introduction chamber 67, an opening 68 for sucking air taken in from the intake box 62a into the introduction chamber 67 is formed.

The intake box 62c is formed to be substantially box-like with a plate-like member. The bottom surface of the intake box 62c is provided so as to be in close contact with the upper surface of the intake box 62b toward the right end. At the close-contact surface, a communication hole that establishes communication between the intake box 62b (the introduction chamber 67) and the intake box 62c is provided. At the front surface of the intake box 62c, an intake pipe 63 that extends toward an intake manifold of the engine 44 is provided.

In the structure described above, by the negative pressure created in the combustion chamber of the engine 44, air taken in from the intake port 53 is supplied to the engine 44 via the intake boxes 62a, 62b, 62c and the intake pipe 63. Air and the like from the engine 44 are discharged to the outside via an exhaust pipe 64 that extends from the rear side of the engine 44 toward the discharge port 54.

As shown in Fig. 22, the generator 43 is provided in an intermediate portion of the intake path 61.

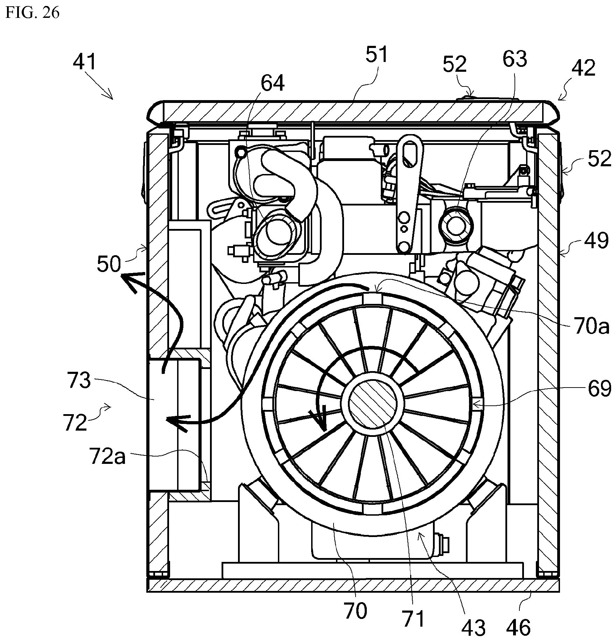

The generator 43 mainly consists of a body formed by a rotor and the like, a cooling fan 69 (see Fig. 26) that cools the body, and a housing 70 that houses the body and the cooling fan 69.

The housing 70 is substantially cylindrically shaped, and disposed having its longitudinal direction oriented in the front-rear direction. The front surface of the housing 70 is fixed to the rear surface of a flywheel housing 66 with tightening components such as bolts. The rear surface of the housing 70 is formed as an inlet 65 for taking in air from the intake path 61.

At the front surface of the intake box 62b that constitutes the intake path 61, the inlet 65 of the generator 3 is provided.

At the front surface of the intake path 62b, an opening corresponding to the shape of the inlet 65 (the rear surface) of the generator 43 is provided, and the inlet 65 of the generator 43 is fixed to the opening.

As shown in Fig. 26, on the front side in the housing 70, the cooling fan 69 for cooling the generator 43 is provided. On the rear side of the cooling fan 69, the generator body is provided. The cooling fan 69 is fixed to a rotor drive shaft 71 that rotatably supports the rotor that constitutes the generator 43. The rotor drive shaft 71 is configured to be rotatable by driving of the engine 44.

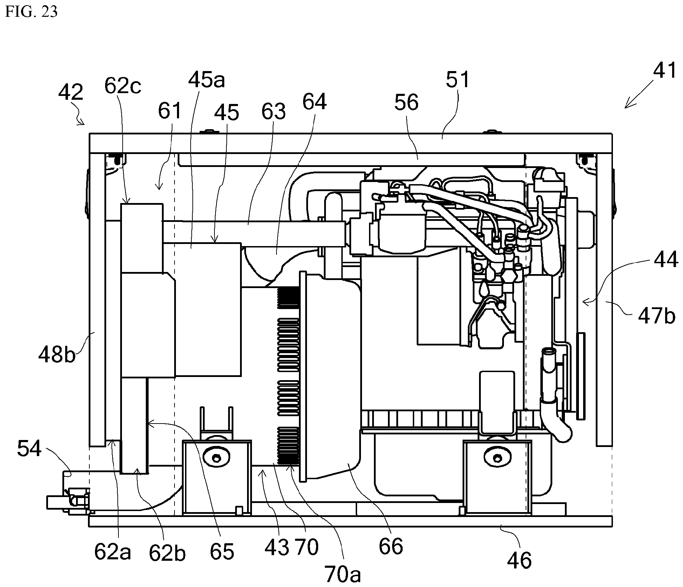

As shown in Figs. 23 to 25, the housing 70 that constitutes the generator 43 includes outlets 70a at the outer circumferential surface on its front side for discharging air supplied via the inlet 65. The outlets 70a are provided in a plurality of numbers at predetermined intervals along the entire outer circumferential surface of the housing 70 positioned outside the cooling fan 69.

In the structure described above, the air taken into the casing 42 via the intake port 53 by driving of the engine 44 is taken into the engine 44 via the intake box 62. Part of the air flowing into the intake box 62 is taken into the housing 70 structuring the generator 43 via the inlet 65, by rotation of the cooling fan 69. The air taken into the housing 70 cools the generator body, and thereafter is discharged to the outside of the housing 70 via the outlets 70a.

Into the intake path 61, air is taken toward the engine 44. By virtue of the inlet 65 for supplying air to the generator 43 being provided in an intermediate portion of the intake path 61 (the front surface of the intake box 62b), part of air taken in for the engine 44 can be supplied to the generator 43. Thus, the generator 43 is efficiently cooled. That is, the generator 43 is cooled using the air flowing through the intake path 61.

Structuring the intake box 62 to be meandering reduces leakage of noises generated by the engine 44 taking in the air.

Note that, while the intake boxes 62a, 62b, 62c are configured as separate components, they may be integrated. With the intake box 62 being formed substantially box-like with a plate-like member, providing a plurality of partitions inside the intake box 62 causes air taken in from the intake port 53 to meander through the intake box 62.

As shown in Fig. 26, an exhaust path 72 is provided at the inner circumferential surface of the casing 42 for guiding air discharged from the outlets 70a to the exhaust port 58 provided at the outer circumferential surface of the casing 42.

The air from the outlets 70a is discharged, by the rotation of the cooling fan 69, as whirl flow relative to the rotation center of the rotor drive shaft 71.

With reference to Fig. 26, a description will be given of the flow of air discharged from the outlets 70a.

The rotor drive shaft 71 rotates counterclockwise as seen in a rear view. The air discharged from the outlets 70a provided along the entire circumference of the housing 70 is introduced as whirl flow to an exhaust intake port 72a of the exhaust path 72 formed at the lower portion of the left side plate 50. Thus, air is less prone to be contained in the casing 42.

Accordingly, efficient cooling of the inside of the casing 42 is attained, and the engine generator 41 can be driven in an excellent state.

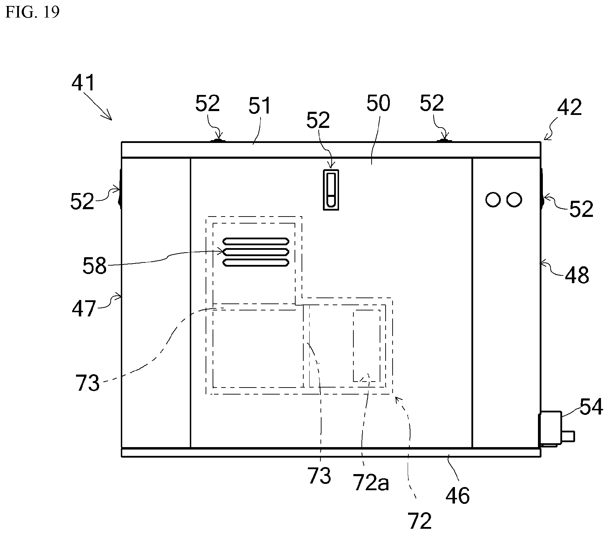

The exhaust path 72 is a passage formed by a plate-like member, and formed to be substantially L-like from the exhaust intake port 72a toward the exhaust port 58 as seen in a side view (see Fig. 19).

The exhaust path 72 is configured so that air taken in from the exhaust intake port 72a flows frontward and then upward, and is discharged to the outside of the casing 42 via the exhaust port 58.

In the exhaust path 72, a plurality of partitions 73 are provided so as to form the passage to be meandering.

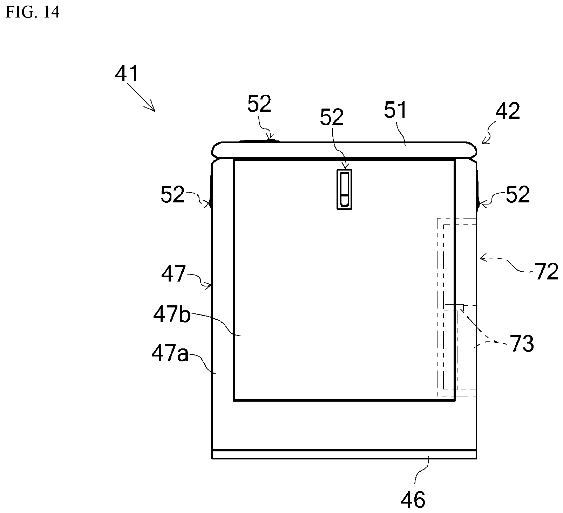

As shown in Figs. 14, 16, and 19, in the passage formed frontward from the exhaust intake port 72a, the partition 73 is provided to extend from the left side surface to the right side surface. In the passage formed upward, the partition 73 is provided to extend from the right side surface to the left side surface.

Further, by virtue of the exhaust intake port 72a being provided on the lower side relative to the exhaust port 58, that is, by virtue of the exhaust path 72 being configured to cause the air to flow upward, air taken into the exhaust intake port 72a is facilitated to flow toward the exhaust port 58. Thus, the air can be smoothly discharged. Thus, air is less prone to be contained in the casing 42.

By virtue of the partitions 73 structuring the meandering flow passage in the exhaust path 72, noises produced inside the casing 42 are less prone to leak to the outside.

As shown in Figs. 22 to 25, the control apparatus 45 is disposed on the wall surface that constitutes the intake path 61.

The control apparatus 45 includes: a control apparatus that controls the generator 43 and the engine 44; a control apparatus that remotely controls the operation panel 55; a terminal block for connecting the control apparatus to the generator 43 and the engine 44; and a control box 45a housing such components.

The control box 45a that constitutes the control apparatus 45 extends upward from the upper surface of the arc-shaped housing 70. That is, the control box 45a is configured as a box whose bottom surface is substantially arc-shaped. The control box 45a is disposed so that its upper surface is in contact with the bottom portion of the intake pipe 63. The control box 45a is disposed so that its rear surface is in close contact with the front surface of the intake box 62b.

In the structure described above, the air taken in from the intake port 53 is supplied into the intake box 62b from the intake box 62a. Thereafter, part of the supplied air is taken into the generator 43. The remainder of the air flows upward along the intake box 62b, and thereafter taken into the engine 44 via the intake pipe 63 while cooling the control apparatus 45 disposed at an upper portion on the front surface of the intake box 62b.

As described above, by virtue of the control box 45a being disposed on the front surface of the intake box 62b (the wall surface that constitutes the intake path 61), the control apparatus 45 can be cooled by the air flowing through the intake box 62b.

Further, similarly, by virtue of the control box 45a being disposed in the bottom portion of the intake pipe 63 (the wall surface that constitutes the intake path 61), the control apparatus 45 can be cooled by the air flowing through the intake pipe 63.

Thus, with the engine generator 41, the control apparatus 45 can be cooled using air flowing through the intake path 61.

Cooling the control apparatus 45 can avoid a reduction in functions of the circuitry or the like structuring the control apparatus due to heat, and thus allows the generator 43 and the engine 44 to drive in an excellent state.

As to the control box 45a structuring the control apparatus 45, by setting the upper surface of the control box 45a at a position higher than the intake pipe 63, the intake pipe 63 may be disposed so as to penetrate through the control box 45a.

In this case, by virtue of the intake pipe 63 being partially directly disposed inside the control box 45a, further cooling effect on the control apparatus 45 can be expected.

While the control apparatus 45 is configured to extend upward from the upper surface of the generator 43, the present invention is not limited thereto. The control apparatus 45 can be provided, for example, to be in close contact with the upper surface of the intake box 62 or the side surface of the intake box 62 (the wall surface that constitutes the intake path 61). Further, the control apparatus 45 may be disposed in the intake box 62 (in the intake path 61).

Similarly to the case having described above, the control apparatus 45 can be cooled by air flowing in the intake path 61. Hence, it becomes possible to avoid a reduction in functions of the circuitry or the like structuring the control apparatus 45 due to heat, and thus to allow the engine 44 and the generator 43 to drive in an excellent state.

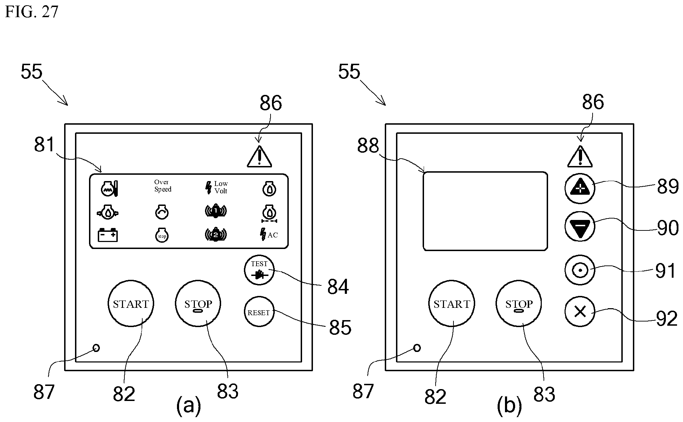

With reference to Fig. 27, a description will be given of an operation panel 55.

The operation panel 55 is provided for the operator to operate the engine generator 41 via the control apparatus 45, such as actuation of the engine generator 41, and for indication of the operational state. Being wirelessly connected to the control apparatus 45, the operation panel 55 realizes such operations of the engine generator 41 and the indication of the operational state.

As shown in Fig. 27(a), at the upper portion of the operation panel 55, a plurality of alert LEDs 81 are provided for alerting the operator upon occurrence of any error in the engine generator 41.

The alert LEDs 81 are LEDs that alert the operator to various errors of the engine generator 41. The alert LEDs 81 light up or blink the marks that are provided at the upper portion of the operation panel 55 and correspond to twelve types of errors, so as to alert the operator to any error occurring in the engine generator 41.

At the lower left portion of the alert LEDs 81, an actuation button 82 for actuating the engine generator 41 and a stop button 83 for stopping the engine generator 41 are arranged in the right-left direction.

At the lower right portion of the alert LEDs 81, that is, on the right side of the actuation button 82 and the stop button 83, a test button 84 for checking lighting up or blinking of the alert LEDs and a reset button 85 for stopping buzzer upon occurrence of any error in the engine generator 41 are arranged in the top-bottom direction.

At the upper right portion of the operation panel 55, an icon 86 is provided for indicating occurrence of any error in the engine generator 41 in such an event.

At the lower left portion of the operation panel 55, a state indicator lamp 87 of the operation panel 55 is provided for indicating connection/disconnection to the control apparatus 45.

In another embodiment shown in Fig. 27(b), at the upper left portion of the operation panel 55, a liquid crystal monitor 88 is provided as a display apparatus for displaying the operational state. Beneath the liquid crystal monitor 88, the actuation button 82 for actuating the engine generator 41 and the stop button 83 for stopping the engine generator 41 are arranged in the right-left direction.

On the right side of the liquid crystal monitor 88, the actuation button 82, and the stop button 83, that is, on the right side of the operation panel 55, select buttons 89, 90 for selecting a desired command from a menu of a plurality of commands displayed on the liquid crystal monitor 88, a confirm button 91 for confirming execution of the command selected with the select buttons 89, 90, and a cancel button 92 for canceling the command selected with the select buttons 89, 90 are arranged in the top-bottom direction.

Provided above the select buttons 89, 90 in the operation panel 55 is the icon 86 for indicating occurrence of any error in the engine generator 41 in such an event.

Provided at the lower left portion of the operation panel 55 is the state indicator lamp 87 of the operation panel 55 for indicating connection/disconnection to the control apparatus 45.

Further, the stop button 83 is provided with a projection at its central lower portion. Checking the projection, the operator can discriminate between the actuation button 82 and the stop button 83 in the dark. Thus, operability in the dark improves.

Similarly, the select button 89 and the confirm button 91 are each provided with a projection at its center. Checking the projection, the operator can discriminate between the select button 89 and the select button 90, or between the confirm button 91 and the cancel button 92. Thus, operability in the dark improves.

Further, providing backlight to the stop button 83 enables lighting up of the outer edge of the stop button 83 and the string provided at the center of the stop button 83. This improves visibility and operability in the dark.

The operation panel 55 is provided separately from the control apparatus 45, and removably provided at any surface of the casing 42.

The operation panel 55 is configured to allow the operator to remotely operate the engine generator 41 through the control apparatus 45.

An opening is provided at any surface of the casing 42 for the operation panel 55 to be fitted in. Thus, the operation panel 55 is removably provided at the casing 42.

In the present embodiment, the operation panel 55 is attached to the upper portion of the right side surface of the front plate 47. The opening for fitting the operation panel 55 in is provided at an upper portion of the right side surface the front plate 47.

In attaching the operation panel 55 to the engine generator 41, the operation panel 55 is fitted into the opening and fixed with tightening components such as bolts.

When the operation panel 55 is not attached to the engine generator 41, the opening is provided with a lid which conforms to the outer shape of the opening. The lid is fitted into the opening, and fixed with tightening components such as bolts.

Further, since the operation panel 55 is configured to allow the operator to remotely operate the engine generator 41 with the control apparatus 45, the operation panel 55 can be separately provided from the control apparatus 45. Accordingly, the present invention selectably provides the operator with the engine generator including the operation panel 55 and the engine generator not including the operation panel 55. Thus, the present invention provides the engine generator having the structure being suitable for use of each individual operator.

In the structure described above, the operation panel 55 can be provided at any position in the boat in which the engine generator 41 is installed.

That is, the operation panel 55 can be provided not only at the casing 42 of the engine generator 41, but also, for example, at any position in the boat such as the inside of the cabin or at the deck.

Accordingly, for example, in the boat in which the engine generator is installed, the operation panel 55 may be provided at any position in the boat and at the engine generator 41. Alternatively, the operation panel 55 may be provided just at an arbitrary position in the boat, or the operation panel 55 may be provided just at the engine generator 41.

As described above, since the operation panel 55 can be provided at a desired position in the boat, the operation panel 55 can be provided at the position suitable for each individual operator's use of the engine generator 41. This improves convenience of the engine generator 41.

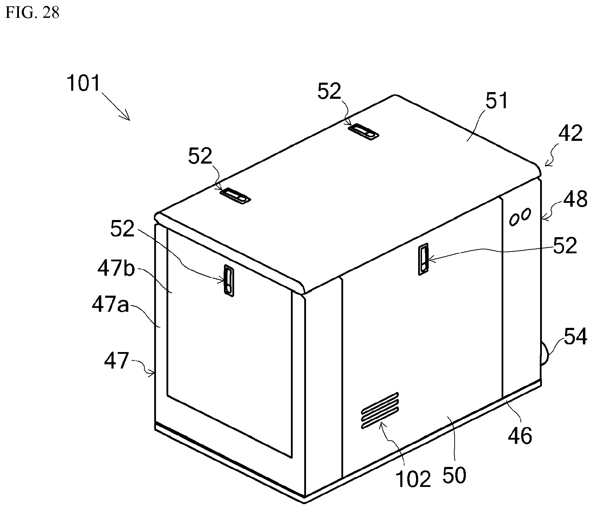

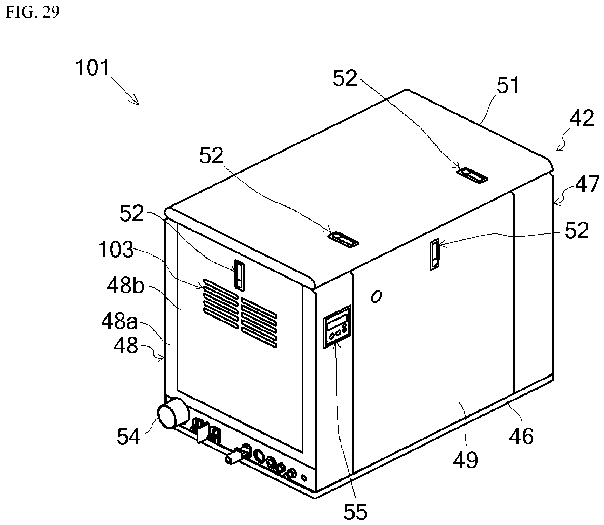

With reference to Figs. 28 and 29, a description will be given of an engine generator 101.

As shown in Fig. 28, at the front lower portion of the outer circumferential surface of the left side plate 50, an exhaust port 102 is provided for discharging air inside the casing 42.

The exhaust path is configured to cause air taken in from the exhaust intake port to flow frontward, and thereafter be discharged via the exhaust port 102. That is, the exhaust intake port is formed at the position at the lower portion of the left side plate 50.

In the structure described above, similarly to the above-described embodiment, air discharged from the generator 43 is introduced into the discharge port 102. Thus, air is less prone to be contained in the casing 42.

Accordingly, efficient cooling of the inside of the casing 42 is attained, and the engine generator 41 can be driven in an excellent state.

As shown in Fig. 29, below the fixture 52 at the rear plate 48b, an intake port 103 for taking air into the casing 42 from the outside is provided. The intake port 103 includes communication holes arranged laterally symmetrically in two columns and five rows, each communication hole being elongated in the longitudinal direction which is the right-left direction.

As described above, the number of the communication holes may be increased as compared to the above-described embodiment. The present embodiment exhibits the effect similar to that exhibited by the above-described embodiment.

While the description of the engine generator of the present invention has been exemplarily given of a marine engine generator, the present invention is not limited thereto and applicable to any use where the installation place is restricted.

### INDUSTRIAL APPLICABILITY

The present invention is applicable to an engine generator.

### DESCRIPTION OF REFERENCE SIGNS

1: Engine generator
2: Generator
3: Engine
4: Casing
5: Bottom plate
6: Support frame
7: Panel
8a, 8b, 8c: Panel
9: Operation panel
10: Console
13a: Control apparatus
41: Engine generator
42: Casing
43: Generator
44: Engine
45: Control apparatus
53: Intake port
55: Operation panel
58: Exhaust port
61: Intake path
62: Intake box
63: Intake pipe
64: Exhaust pipe
65: Inlet
67: Introduction chamber
68: Opening
69: Cooling fan
70: Housing
70a: Outlet
72: Exhaust path
72a: Exhaust intake port

## Claims

1. An engine generator comprising:
a casing;
a generator; and
an engine that drives the generator, the generator and the engine being housed in the casing, wherein
a plurality of panels each having a predetermined dimension are respectively removably provided at side surfaces of the casing, and
any selected one of the plurality of panels can be exchanged for a console for the engine generator.

2. The engine generator according to claim 1, wherein the console is attached on the generator side in the casing.

3. The engine generator according to claim 1, wherein
the casing further houses a control apparatus that controls the generator and the engine,
an intake path for taking air into the engine is formed in the casing, and
the generator and the control apparatus are cooled by the air flowing through the intake path.

4. The engine generator according to claim 3, wherein the generator is provided in an intermediate portion of the intake path.

5. The engine generator according to claim 3 or 4, wherein the control apparatus is disposed in the intake path or on a wall surface that constitutes the intake path.

6. The engine generator according to any one of claims 3 to 5, wherein
the generator includes an inlet for taking in air and an outlet for discharging the air supplied through the inlet,
the inlet is provided in an intermediate portion of the intake path, and
an exhaust path that guides the air discharged from the outlet to a discharge port provided in the casing is formed.
